(19) Europäisches Patentamt
European Patent Office
Office européen des brevets

(11) EP 3 770 319 B1

(12) EUROPEAN PATENT SPECIFICATION

(45) Date of publication and mention
of the grant of the patent:
**29.11.2023 Bulletin 2023/48**

(21) Application number: **19770712.8**

(22) Date of filing: **22.01.2019**

(51) International Patent Classification (IPC):
**D07B 1/06** $^{(2006.01)}$    **B60C 9/00** $^{(2006.01)}$

(52) Cooperative Patent Classification (CPC):
**B60C 9/0007; B60C 9/0057; B60C 9/2006;
D07B 1/0646;** B60C 2009/0092; B60C 2009/2077;
B60C 2009/2096; D07B 2201/2008;
D07B 2201/2018; D07B 2201/2019;
D07B 2201/2022; D07B 2207/4072

(86) International application number:
**PCT/JP2019/001896**

(87) International publication number:
**WO 2019/181177 (26.09.2019 Gazette 2019/39)**

(54) **STEEL CORD AND TIRE**

STAHLKORD UND REIFEN

CÂBLE D'ACIER ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2018 JP 2018052816**

(43) Date of publication of application:
**27.01.2021 Bulletin 2021/04**

(73) Proprietors:
• **Sumitomo Electric Tochigi Co., Ltd.
Utsunomiya-shi, Tochigi 321-3231 (JP)**
• **SUMITOMO ELECTRIC INDUSTRIES, LTD.
Osaka-shi, Osaka 541-0041 (JP)**
• **Sumitomo Rubber Industries, Ltd.
Kobe-shi, Hyogo 651-0072 (JP)**

(72) Inventors:
• **MATSUOKA, Akifumi
Utsunomiya-shi, Tochigi 321-3231 (JP)**
• **SAITO, Kazuhiko
Utsunomiya-shi, Tochigi 321-3231 (JP)**
• **YAMASHITA, Kenichi
Utsunomiya-shi, Tochigi 321-3231 (JP)**

• **TAKAMURA, Shinei
Osaka-shi, Osaka 541-0041 (JP)**
• **SUZUKI, Masumi
Kobe-shi, Hyogo 651-0072 (JP)**
• **FUJISAWA, Koji
Kobe-shi, Hyogo 651-0072 (JP)**

(74) Representative: **Boult Wade Tennant LLP
Salisbury Square House
8 Salisbury Square
London EC4Y 8AP (GB)**

(56) References cited:
WO-A1-92/01832    JP-A- H1 181 167
JP-A- H07 173 782    JP-A- H07 189 144
JP-A- H11 350 366    JP-A- 2000 335 206
JP-A- 2001 055 676    JP-A- 2001 213 113
JP-A- 2016 075 003

• ANONYMOUS: "High tensile strength steel cord
constructions for tyres", RESEARCH
DISCLOSURE, KENNETH MASON
PUBLICATIONS, HAMPSHIRE, UK, GB, vol. 340,
no. 54, 1 August 1992 (1992-08-01), XP007118007,
ISSN: 0374-4353

Processed by Luminess, 75001 PARIS (FR)

EP 3 770 319 B1

**Description**

Technical Field

The present invention relates to a steel cord and a tire.

Background Art

For example, Patent Document 1 proposes a pneumatic tire using a belt cord including a twisted string obtained by twisting together four filaments. The belt cord has an elliptical cross-section. In the cross-section, the ratio of the length of the minor axis to the length of the long axis of the elliptical cross-section is within a predetermined range. The respective filaments are provided in a predetermined arrangement.

[Prior Art Document]

[Patent Document]

[Patent Document 1] Japanese Laid-open Patent Publication No. 2017-190032
JP2001055676A describes a steel cord for reinforcing rubber material, its production and pneumatic tire. A wire having 0.15-0.40 mm wire diameter d is shaped into a two-dimensional wave shape at an amplitude within the range of 2d-5d, and three to five shaped wires are twisted at the same pitch Pc of 6-30 mm as that at the shaping so that the position of the neighboring wire may be changed from the upper part to the lower part in order to provide the objective steel cord. The length of the major axis in the cross section of the cord is nearly equal to the amplitude at the shaping of the wire, and the length of the minor axis is nearly equal to the stack of two wires in the steel cord having flat cross section.
JPH11350366A describes a steel cord.
JP2016075003A describes a steel cord and manufacturing method thereof.

Summary of the Invention

According to one aspect of the present disclosure, a steel cord has a $1 \times 4$ structure in which four element wires are twisted together,

wherein at least one of the four element wires is a wavy element wire repeatedly having bent portions and non-bent portions along a longitudinal direction,
wherein the steel cord in a cross-section perpendicular to the longitudinal direction has a flattened shape, and
wherein any ellipses drawn circumscribing the four element wires in a cross-section perpendicular to the longitudinal direction have slopes of minor axes of the ellipses within $\pm 30$ degrees from a median value.

Brief Description of the Drawings

FIG. 1 is an explanatory view of a steel cord having a $1 \times 4$ structure according to one aspect of the present disclosure;
FIG. 2 is a cross-sectional view in a plane perpendicular to the longitudinal direction of the steel cord of FIG. 1;
FIG. 3 is an explanatory view of a wavy element wire;
FIG. 4 is an explanatory view of a method of manufacturing a wavy element wire;
FIG. 5 is an explanatory view of a relationship in a conventional flattened steel cord between the slopes of the minor axes of ellipses circumscribing the element wires in cross-sections perpendicular to the longitudinal direction and the variation of the thickness of the steel cord;
FIG. 6 is an explanatory view of the maximum value and the minimum value of the thickness in the steel cord according to one aspect of the present disclosure;
FIG. 7 is an explanatory view of a flattening device;
FIG. 8 is a cross-sectional view of a tire according to one aspect of the present disclosure; and
FIG. 9 is a diagram schematically illustrating belt layers.

Embodiment for Carrying Out the Invention

[Problem to be Solved by the Present Disclosure]

In the invention disclosed in Patent Document 1, by making the belt cord having an elliptical cross-section and by setting the ratio between the length of the major axis and the length of the minor axis of the cross-section in a predetermined range, the volume of a topping rubber in a belt of the tire is reduced and rolling resistance is reduced.

In recent years, however, there is a need to further enhance the performance of tires. Therefore, further weight reduction is required for tires, for example, to further reduce rolling resistance or the like. At the same time, there is a need to reduce the frequency of replacing tires and to make tires that are excellent in durability so as to be usable for a long period of time. Steel cords that are used for tires are also desired to be steel cords that enable to form tires that are excellent in durability and lightness in weight.

Therefore, the present disclosure has an object to provide a steel cord that enables to form a tire that is excellent in lightness in weight and durability.

[Effect of the Present Disclosure]

According to the present disclosure, it is possible to provide a steel cord that enables to form a tire that is excellent in lightness in weight and durability.

[Description of Embodiments of the Present Disclosure]

First, aspects of the present disclosure will be described by listing. In the following description, the same numerals are used to denote same or corresponding elements; accordingly, explanation for those elements will not be repeatedly provided.

(1) According to one aspect of the present disclosure, a steel cord has a $1 \times 4$ structure in which four element wires are twisted together,

wherein at least one of the four element wires is a wavy element wire repeatedly having bent portions and non-bent portions along a longitudinal direction,
wherein the steel cord in a cross-section perpendicular to the longitudinal direction has a flattened shape, and
wherein in a plurality of cross-sections perpendicular to the longitudinal direction, in a case in which ellipses circumscribing the four element wires are drawn, slopes of minor axes of the ellipses are within $\pm 30$ degrees from a median value.

The steel cord can be arranged, for example, in a belt layer of a tire. The belt layer includes the steel cord and rubber and the steel cord is embedded within the rubber. The thickness of the belt layer can be selected to be able to embed the steel cord within the rubber. Thus, by making the cross-sectional shape perpendicular to the longitudinal direction of the steel cord a flattened shape and suppressing the thickness of the steel cord, the thickness of rubber required for embedding the steel cord can be suppressed, and the thickness of the belt layer can also be suppressed.

Furthermore, according to consideration by the inventors of the present invention, by making the slopes of the minor axes of the ellipses circumscribing the four element wires in a plurality of cross-sections perpendicular to the longitudinal direction within $\pm 30$ degrees from the median value, which have not been considered for attention conventionally, the variation in the thickness and the maximum thickness can be suppressed.

In this manner, the steel cord according to one aspect of the present disclosure is thin, and the variation in the thickness and the maximum thickness are small. Therefore, the thickness of a belt layer manufactured by using the steel cord can be suppressed, and the weight of the belt layer can be reduced. As a result, it is also possible to reduce the weight of a tire including the belt layer.

Further, by using, as at least one of the four element wires included in the steel cord, a wavy element wire repeatedly having bent portions and non-bent portions along the longitudinal direction, the degree of rubber penetration into the inside of the steel cord can be increased at the time of forming a tire using the steel cord. In this manner, by increasing the degree of rubber penetration into the inside of the steel cord at the time of forming a tire, the area of the element wires, included in the steel cord, in contact with rubber can be increased, and the adhesion between the element wires and the rubber can be increased. Thus, in a case in which a tire is mounted and used on a car or the like, although moisture may penetrate the rubber and enter the tire, as described above, by increasing the area of the element wires in contact with rubber, it is possible to reduce contacting and reacting of element wires surfaces with moisture. Therefore, it is possible to maintain a high adhesion between the rubber and the element wires, and it is possible to increase the durability of the tire.

(2) When the wavy element wire is placed on a plane, a height from the plane to the bent portions that are at a far side from the plane is defined as a bending height, and

the bending height is greater than or equal to 240% and less than or equal to 280% of an element wire diameter of the wavy element wire.

(3) In a plurality of cross-sections perpendicular to the longitudinal direction, in a case in which ellipses circumscribing the four element wires are drawn, an average value of minor axis lengths/major axis lengths that are ratios of the minor axis lengths to the major axis lengths of the ellipses is greater than or equal to 0.76 and less than or equal to 0.82.

(4) Element wire diameters of the element wires may be greater than or equal to 0.25 mm and less than or equal to 0.45 mm.

(5) In a case in which an ellipse circumscribing the four element wires is drawn in one cross-section perpendicular to the longitudinal direction, a minor axis direction of the ellipse is defined as a thickness direction,

a maximum length in the thickness direction in cross-sections perpendicular to the longitudinal direction is defined as a thickness, and
a coefficient of variation of the thickness is less than or equal to 0.05.

(6) A tire can include the steel cord according to any one of (1) to (5) .

(7) The tire may have a degree of rubber penetration of the steel cord greater than or equal to 70%.

[Details of Embodiment of The Present Disclosure]

Specific examples of a steel cord and a tire according to one embodiment of the present disclosure (hereinafter referred to as "the present embodiment") will be described below with reference to the drawings. It should be noted that the present invention is not limited to these examples but is set forth in the claims and is intended to include all modifications within the meaning and scope of the claims.

<Steel Cord>

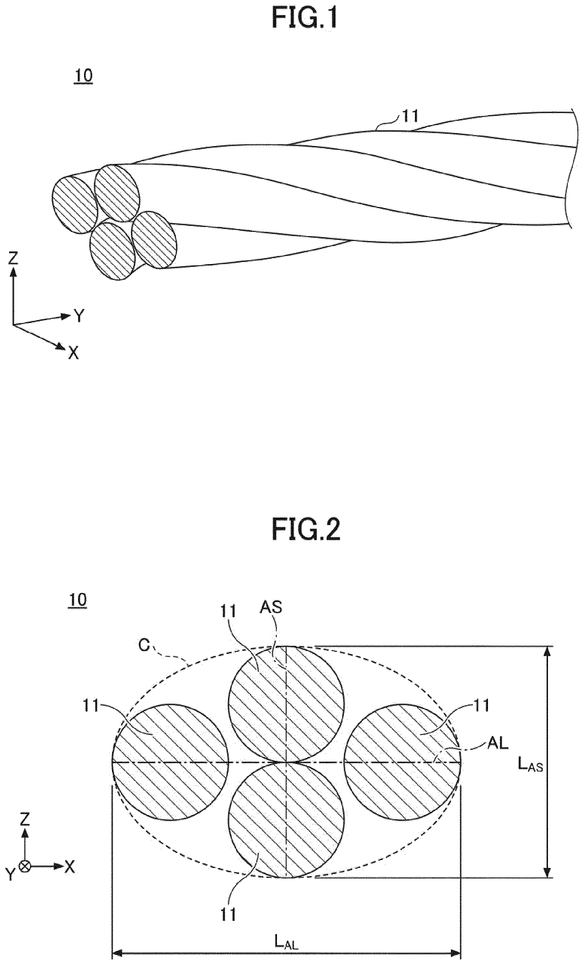

In the following, a steel cord according to the present embodiment will be described with reference to FIG. 1 to FIG. 7.

The steel cord according to the present embodiment has a $1 \times 4$ structure in which four element wires, which are also referred to as filaments, are helically twisted together along the longitudinal direction.

Here, FIG. 1 illustrates a perspective view of an exemplary configuration of a steel cord 10 according to the present embodiment. Also, a cross-sectional view of the steel cord 10 illustrated in FIG. 1 in a plane perpendicular to the longitudinal direction is illustrated in FIG. 2. It should be noted that the longitudinal direction of the steel cord 10 is the Y-axis direction illustrated in the drawings. The plane perpendicular to the longitudinal direction is the plane parallel to the XZ plane in the drawings.

The steel cord 10 illustrated in FIG. 1 and FIG. 2 has a $1 \times 4$ structure in which four element wires 11 are twisted together. The $1 \times 4$ structure means a structure in which four element wires are twisted together to form a single layer (one layer). The single layer means a structure in which the element wires 11 are arranged in a single layer (one layer) along the circumferential direction of one circle in a cross-section perpendicular to the longitudinal direction of the steel cord 10 as illustrated in FIG. 2.

The inventors of the present invention have prepared five types of steel cords each of which has a $1 \times N$ structure by varying the number of element wires from two to six and selecting the element wire diameter to have the same breaking strength, and have evaluated and investigated cord diameters and masses of these. It should be noted that in this case, N in the $1 \times N$ structure corresponds to the number of element wires included in each steel cord. In each case, N element wires are arranged and so that the element wires form a single layer along the circumferential direction of one circle in a cross-section perpendicular to the longitudinal direction to have a twisted structure.

As a result, it has been confirmed that by making a steel cord having a $1 \times 4$ structure in which the number of included element wires is four, the cord diameter of the steel cord can be particularly reduced and the mass can be reduced in comparison to steel cords of other $1 \times N$ structures. Therefore, it is preferable that the steel cord according to the present embodiment has a $1 \times 4$ structure because it is possible to particularly reduce the weight of a tire using the steel cord.

The diameters of the element wires included in the steel cord according to the present embodiment, that is, the element wire diameters are not particularly limited. However, the diameters of the element wires are preferably greater than or equal to 0.25 mm and less than or equal to 0.45 mm and are more preferably greater than or equal to 0.35 mm and less than or equal to 0.42 mm.

By making the element wire diameters greater than or equal to 0.25 mm, the breaking load of the steel cord containing the element wires can be sufficiently increased.

In addition, the mass of the steel cord can be suppressed by making the element wire diameters less than or equal to 0.45 mm. Therefore, it is preferable because the weight of a tire using the steel cord can be particularly reduced.

It should be noted that it is preferable that the element wire diameter of a wavy element wire, which will be described later below, also satisfies the above preferable range for the element wire diameters.

It is preferable that, in the steel cord according to the present embodiment, at least one of the four element wires is a wavy element wire repeatedly having bent portions and non-bent portions along the longitudinal direction.

A cross-section perpendicular to the longitudinal direction of the steel cord according to the present embodiment is a flattened shape as will be described later below. However, in a case in which a cross-section perpendicular to the longitudinal direction is a flattened shape, gaps between the element wires may not be sufficiently secured, and the degree of rubber penetration into the inside of the steel cord may be decreased. Thus, in the steel cord according to the present embodiment, at least one of the four element wires included in the steel cord is a wavy element wire repeatedly having bent portions and non-bent portions along the longitudinal direction. This makes it possible to form sufficient gaps between the element wires and to increase the degree of rubber penetration into the inside of the steel cord at the time of forming a tire using the steel cord of the present embodiment. In this manner, by increasing the degree of rubber penetration into the inside of the steel cord at the time of forming the tire, the area of the element wires, included in the steel cord, in contact with rubber can be increased, and the adhesion between the element wires and the rubber can be increased.

Although in a case in which a tire is mounted and used on a car or the like, moisture may penetrate the rubber and enter the tire, as described above, by increasing the area of the element wires in contact with rubber, it is possible to reduce contacting and reacting of element wires surfaces with moisture. Therefore, it is possible to maintain a high adhesion between the rubber and the element wires inside the tire, and it is possible to increase the durability of the tire.

It should be noted that the upper limit of the number of wavy element wires included in the steel cord according to the present embodiment is not particularly limited. For example, all the element wires included in the steel cord can be wavy element wires. However, when the number of wavy element wires is large, the steel cord may be easily untwisted at the end portion or the like in the longitudinal direction of the steel cord, for example, and it may be difficult to maintain the external shape. Therefore, the number of wavy element wires included in the steel cord according to the present embodiment is preferably less than or equal to three and is more preferably less than or equal to two.

Here, a wavy element wire will be described.

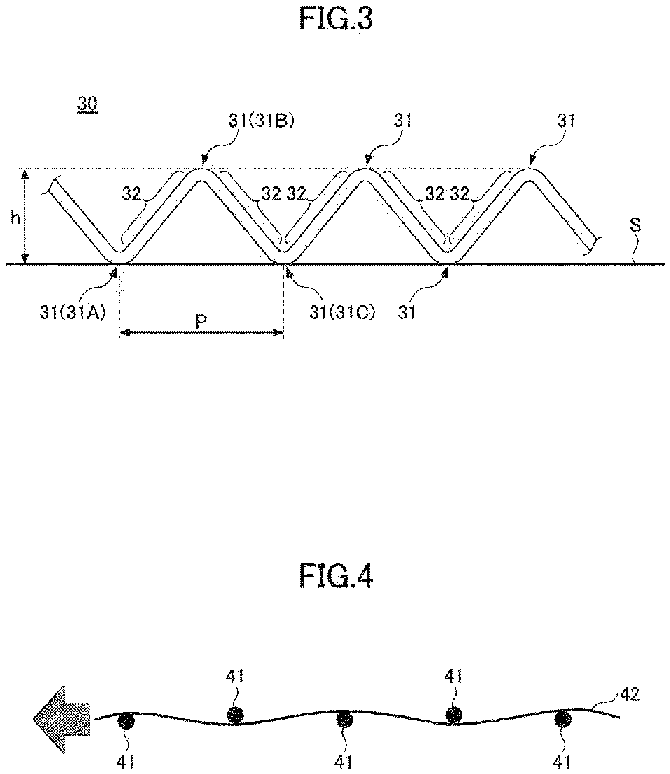

FIG. 3 illustrates an example of the configuration of a wavy element wire 30. The wavy element wire 30 has alternately and repeatedly bent portions 31 and non-bent portions 32 along the longitudinal direction.

It should be noted that although FIG. 3 illustrates an example in which the bent portions 31 bend at an angle close to 90 degrees, the bend portions 31 are not limited to such a configuration and may bend at an angle less than 90 degrees or an angle greater than 90 degrees, for example.

The specific wavy shape of the wavy element wire is not particularly limited. However, it is preferable that a bending height h of the wavy element wire is greater than or equal to 240% and less than or equal to 280% of the element wire diameter of the wavy element wire.

It should be noted that as illustrated in FIG. 3, when the wavy element wire 30 is placed on a plane S, the height from the plane S to a bent portion 31B, which is at the far side from the plane S, is referred to as the bending height h. It should be noted that at the time of evaluating the bending height h, the wavy element wire 30 is arranged as illustrated in FIG. 3 so that a plane passing through the bent portions 31 and the non-bent portions 32 of the wavy element wire 30 is perpendicular to the plane S.

Then, by making the bending height h greater than or equal to 240% of the element wire diameter of the wavy element wire, the wavy element wire has a sufficient bending height with respect to the element wire diameter. That is, sufficient gaps can be formed between the wavy element wires and the other element wires. Therefore, it is preferable because of being able to increase the degree of rubber penetration.

Also, it is preferable to make the bending height h less than or equal to 280% with respect to the element wire diameter of the wavy element wire, because of being able to more reliably prevent untwisting of the steel cord at the end portion in the longitudinal direction of the steel cord or the like and an occurrence of deformation or the like in the external shape.

It is preferable that the bending height h of the wavy element wire is greater than or equal to 260% and less than or equal to 280% with respect to the element wire diameter.

In the wavy element wire, the pitch of repeating the bent portions and the non-bent portions is not particularly limited, but is preferably greater than or equal to 5.0 mm and less than or equal to 30.0 mm, and is more preferably greater than or equal to 5.0 mm and less than or equal to 20.0 mm, for example.

The pitch of repeating the bent portions and the non-bent portions means the distance between bent portions having the same shape and means the length of the steel cord in the longitudinal direction from a bent portion, which is a reference, to a bent portion that is two bent portions away. Therefore, in the example illustrated in FIG. 3, the pitch P of repeating the bent portions and the non-bent portions means the distance from, for example, the bent portion 31A to the bent portion 31C that is two bent portions away.

It is preferable that the pitch of repeating the bent portions and the non-bent portions is greater than or equal to 5.0 mm, because it makes it easy to form and accurately control the bent portions and the non-bent portions on the element wire. In addition, it is preferable that the pitch of repeating the bent portions and the non-bent portions is less than or equal to 30.0 mm, because it makes it possible to manufacture the bent portions and the non-bent portions with a relatively simple device and to suppress the manufacturing cost.

For example, as illustrated in FIG. 4, a wavy element wire can be formed by arranging a plurality of pre-formers 41 and causing an element wire 42, to be the wavy element wire, to pass through the plurality of pre-formers 41 along the direction of the block arrow in the drawing. The shape of bent portions, the length of non-bent portions, and the like can be selected by changing the arrangement, size, and shape of the pre-formers 41.

The steel cord according to the present embodiment has a flattened shape in a cross-section perpendicular to the longitudinal direction. Also, in the steel cord of the present embodiment in a plurality of cross-sections perpendicular to the longitudinal direction, in a case in which ellipses circumscribing the four element wires are drawn, slopes of minor axes of the ellipses are within ±30 degrees from a median value.

A shape in a cross-section perpendicular to the longitudinal direction of the steel cord according to the present embodiment will be described with reference to FIG. 2.

The steel cord 10 according to the present embodiment can have a flattened shape with the thickness smaller than the width in a cross-section perpendicular to the longitudinal direction, as illustrated in FIG. 2. It should be noted that, in FIG. 2, the X-axis direction is the width direction and the Z-axis direction is the thickness direction.

Specifically, the steel cord 10 according to the present embodiment has a shape in which the four element wires 11 are twisted together, and, in a cross-section perpendicular to the longitudinal direction thereof, the steel cord 10 has a flattened shape in which the circle circumscribing the four element wires 11 is an ellipse C. It should be noted that that a length $L_{AS}$ of a minor axis AS is shorter than a length $L_{AL}$ of a major axis AL of the ellipse C.

A steel cord can be arranged, for example, in a belt layer of a tire. As will be described below with respect to a tire, the belt layer includes the steel cord and rubber and the steel cord is embedded within the rubber. The thickness of the belt layer can be selected to be able to embed the steel cord within the rubber. Thus, by making the cross-sectional shape perpendicular to the longitudinal direction of the steel cord a flattened shape and suppressing the thickness of the steel cord, the thickness of rubber required for embedding the steel cord can be suppressed, and the thickness of the belt layer can also be suppressed. Therefore, by making the steel cord having a flattened shape as a cross-sectional shape, in a case in which the steel cord is used for a belt layer, the amount of rubber contained in the belt layer can be suppressed, and the weight of the belt layer can be reduced. Further, the weight of the tire containing the belt layer can be reduced.

However, according to consideration by the inventors of the present invention, the variation of the thickness is extremely large in a conventional steel cord having a flattened shape in a cross-section perpendicular to the longitudinal direction (which may be referred to simply as the "conventional flattened steel cord"). For this reason, in a case of manufacturing a tire using the conventional flattened steel cord, it is necessary to set the thickness of the belt layer in accordance with the portion where the thickness of the steel cord is the maximum, and the belt layer cannot be sufficiently thinned. Accordingly, in a case in which the tire is manufactured using the conventional flattened steel cord, the weight of the belt layer or the tire containing the belt layer cannot be sufficiently reduced.

The inventors of the present invention have made further consideration for the cause. As a result, it could be confirmed that, in a plurality of cross-sections that are perpendicular to the longitudinal direction of the conventional flattened steel cord, in a case in which elliptical circumscribing circles that are ellipses circumscribing the element wires are drawn, the slopes of the minor axes of the ellipses vary greatly depending on positions in the longitudinal position. Specifically, in a case in which the slopes of the minor axes of the ellipses are measured at a plurality of locations in the longitudinal direction of the steel cord, it could be confirmed that the slopes of the minor axes are distributed in a range of, for example, approximately ±90 degrees from the median value. That is, in the conventional flattened steel cord, it could be confirmed that the slopes of the minor axes of the ellipses, circumscribing the element wires in the cross-sections that are perpendicular to the longitudinal direction, vary by approximately 180 degrees at maximum. Thus, it has been found that the thickness of the steel cord varies due to a large variation in the slopes of the minor axes of the ellipses circumscribing the element wires in cross-sections perpendicular to the longitudinal direction.

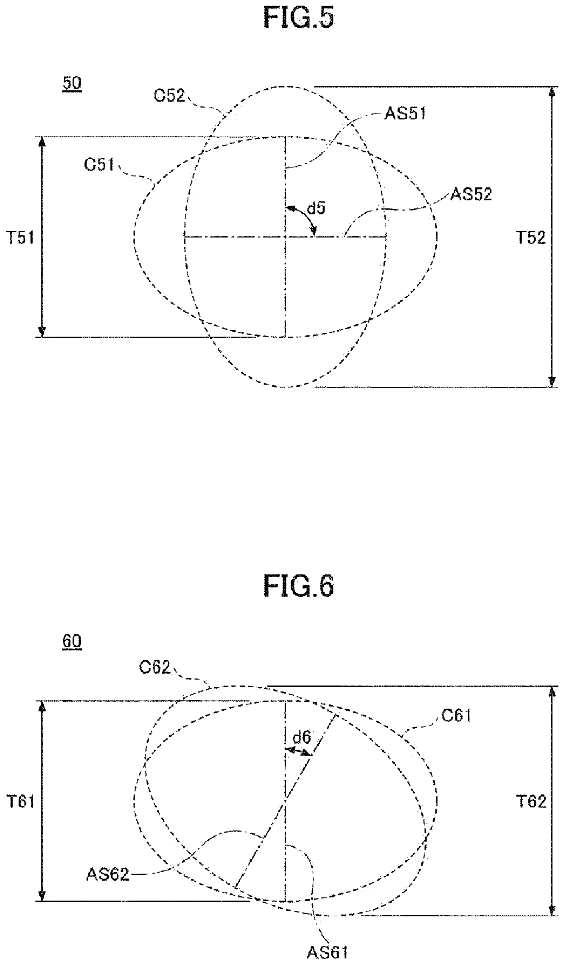

The relationship in the conventional flattened steel cord between the slopes of the minor axes of ellipses circumscribing the element wires in cross-sections perpendicular to the longitudinal direction and the variation of the thickness of the steel cord will be described with reference to FIG. 5.

FIG. 5 is a view obtained by superimposing an ellipse C51 and an ellipse C52, which differ in the slope of the minor axis, circumscribing element wires in a cross-section perpendicular to the longitudinal direction of a conventional flattened steel cord 50. The ellipse C51 indicates an ellipse, circumscribing the element wires in a cross-section perpendicular to the longitudinal direction, at a position where the slope of the minor axis AS51 is a reference slope of the minor axis i.e., the median value. Therefore, the slope of the minor axis AS51 of the ellipse C51 is set as 0 degrees.

Also, the ellipse C52 indicates an ellipse, circumscribing the element wires in a cross-section perpendicular to the longitudinal direction, at a position where the minor axis AS52 is inclined by 90 degrees from the reference slope of the minor axis, i.e., where the angle d5 formed between the minor axis AS51 and the minor axis AS52 is 90 degrees.

Thus, FIG. 5 is a view obtained by superimposing ellipses, selected at two positions in the longitudinal direction of the conventional flattened steel cord 50, circumscribing element wires in cross-sections perpendicular to the longitudinal direction. In FIG. 5, the vertical direction corresponds to the thickness direction of the steel cord. It should be noted that in FIG. 5, illustration of element wires included in the steel cord are omitted.

As illustrated in FIG. 5, in the conventional flattened steel cord 50, the thickness T51 of the steel cord is equal to the length of the minor axis AS51 of the ellipse C51 at a position where the slope of the minor axis of the ellipse, circumscribing the element wires in the cross-section perpendicular to the longitudinal direction, is the median value of 0 degrees.

However, at the position of the ellipse C52 where the minor axis of the ellipse, circumscribing the element wires in the cross-section perpendicular to the longitudinal direction, is inclined with respect to the median value (0 degrees), the major axis of the ellipse C52 is positioned along the thickness direction of the steel cord. Thus, the thickness T52 of the conventional flattened steel cord 50 at that position is the same as the length of the major axis of the ellipse C52.

Thus, in the conventional flattened steel cord 50, the slopes of the minor axes of the ellipses, circumscribing the element wires in the cross-sections perpendicular to the longitudinal direction, are distributed in a range of approximately ±90 degrees from the median value, and the variation is extremely large. Hence, in the conventional flattened steel cord 50, the thickness varies greatly depending on the position in the longitudinal direction, for example, from the thickness T51 corresponding to the length of the minor axis AS51 of the ellipse C51 to the thickness T52 corresponding to the length of the major axis of the ellipse C52 in FIG. 5.

With respect to the above, in the steel cord according to the present embodiment, in a plurality of cross-sections perpendicular to the longitudinal direction, in a case in which the ellipses circumscribing the four element wires that are elliptical circumscribing circles are drawn, the slopes of the minor axes of the ellipses are within ±30 degrees from the median value. Here, the maximum value and the minimum value of the thickness of a steel cord according to the present embodiment will be described with reference to FIG. 6.

FIG. 6 is a view obtained by superimposing an ellipse C61 and an ellipse C62, which differ in the slope of the minor axis, circumscribing four element wires in a cross-section perpendicular to the longitudinal direction of a steel cord 60 according to the present embodiment. The ellipse C61 indicates an ellipse, circumscribing the element wires in a cross-section perpendicular to the longitudinal direction, at a position where the slope of the minor axis AS61 is a reference slope of the minor axis i.e., the median value. Therefore, the slope of the minor axis AS61 of the ellipse C61 is set as 0 degrees.

The ellipse C62 indicates an ellipse, circumscribing the four element wires in a cross-section perpendicular to the longitudinal direction, at a position where the minor axis AS62 is inclined by 30 degrees from the reference slope of the minor axis, that is, where the angle d6 formed between the minor axis AS61 and the minor axis AS62 of the ellipse C61 is 30 degrees, which is the maximum.

Thus, FIG. 6 is a view obtained by superimposing ellipses, selected at two positions in the longitudinal direction of the steel cord 60 according to the present embodiment, circumscribing the four element wires in cross-sections perpendicular to the longitudinal direction. In FIG. 6, the vertical direction corresponds to the thickness direction of the steel cord. It should be noted that in FIG. 6, illustration of the element wires included in the steel cord are omitted.

In the steel cord 60 according to the present embodiment illustrated in FIG. 6, at the position of the ellipse C61, the thickness T61 of the steel cord is the same as the minor axis AS61, resulting in the minimum value. Also, in the case of the ellipse C62 in which the minor axis of the ellipse, circumscribing the four element wires, is inclined by 30 degrees at maximum, the thickness of the steel cord 60 takes the maximum value. Even in this case, the thickness T62 of the steel cord is shorter than the major axis length of the ellipse C62. Therefore, the thickness does not significantly vary and the maximum thickness is also suppressed in comparison to the case of the conventional flattened steel cord 50 illustrated in FIG. 5.

Thus, in the steel cord according to the present embodiment, the slopes of the minor axes of the ellipses, circumscribing the four element wires in a plurality of cross-sections perpendicular to the longitudinal direction, are within ±30 degrees from the median value such that the variation of the slopes of the minor axes of the ellipses is suppressed. Therefore, in the steel cord according to the present embodiment, the variation in the thickness and the maximum thickness can be sufficiently suppressed.

Accordingly, in a case in which the steel cord according to the present embodiment is used as a member of a tire to form a belt layer in accordance with the maximum value of the thickness of the steel cord according to the present embodiment, the thickness of the belt layer can be suppressed and the belt layer can be made thin and lightweight, in comparison to the case of using the conventional flattened steel cord. As a result, it is also possible to reduce the weight of the tire including the belt layer.

It should be noted that the slopes of the minor axes of the ellipses, circumscribing the four element wires in a plurality of cross-sections perpendicular to the longitudinal direction of the steel cord, being within $\pm 30$ degrees from the median value means that the slopes of the minor axes are distributed, with respect to the median value, within a range of -30 degrees or more and +30 degrees or less and within 60 degrees in total. In the following, in a case in which the maximum variation range toward plus or minus with respect to the median value of the slopes of the minor axes is within $\pm 30$ degrees from the median value as described above, the 30 degrees may be referred to as the "maximum variation range from the median value of the slopes of the minor axes".

In the steel cord according to the present embodiment, in a plurality of cross-sections perpendicular to the longitudinal direction, in a case in which the ellipses circumscribing the four element wires are drawn, the slopes of the minor axes of the ellipses are preferably within $\pm 20$ degrees from the median value and are more preferably within $\pm 15$ degrees from the median value. That is, the maximum variation range from the median value of the slopes of the minor axes is more preferably less than or equal to 20 degrees and is further more preferably less than or equal to 15 degrees. This is because the variation in the thickness and the maximum thickness of the steel cord can be particularly suppressed by making, in a case in which the ellipses circumscribing the four element wires are drawn in a plurality of cross-sections perpendicular to the longitudinal direction, the slopes of the minor axes of the ellipses within $\pm 20$ degrees from the median value, further within $\pm 15$ degrees from the median value. As a result, it is also possible to particularly reduce the weight of a belt layer and a tire including the belt layer.

In a case in which the ellipses circumscribing the four element wires are drawn in a plurality of cross-sections perpendicular to the longitudinal direction of the steel cord according to the present embodiment, the method of measuring the maximum variation range from the median value of the slopes of the minor axes is not particularly limited.

For example, a steel cord is embedded in a transparent resin and the sample is cut at a plurality of desired positions in the longitudinal direction of the steel cord such that planes (cross-sections) perpendicular to the longitudinal direction of the steel cord are exposed. Subsequently, using a projector, by drawing the ellipses, circumscribing the four element wires included in the respective cross-sections, and by measuring the slopes of the minor axes, determination can be made.

Also, for example, Computed Tomography (CT) is used to measure cross-sectional images perpendicular to the longitudinal direction of the steel cord at a plurality of locations. Then, by drawing the ellipses circumscribing the four element wires included in the respective cross-sectional images and by measuring the slopes of the minor axes, determination can be made.

In measurement by either method, with respect to a range of 5 cm or more and 25 cm or less along the longitudinal direction of the steel cord, it is preferable to draw the ellipses circumscribing the element wires in cross-sections at ten or more measurement points, to measure the slopes of the minor axes of the ellipses, and to evaluate the variation of the slopes of the minor axes, for example. It should be noted that the upper limit of the measurement points is not particularly limited, but, for example, is preferably less than or equal to 250 points from the viewpoint of productivity. Also, it is preferable that the measurement points are arranged to be equally spaced along the longitudinal direction of the steel cord.

As described above, in the steel cord according to the present embodiment, in a case in which the ellipses circumscribing the four element wires are drawn in a plurality of cross-sections perpendicular to the longitudinal direction, the variation of the slopes of minor axes of the ellipses is suppressed. Thus, in the steel cord according to the present embodiment, the variation in its thickness can be suppressed.

The variation of the thickness of the steel cord can be represented, for example, by a coefficient of variation that is a value obtained by dividing the standard deviation by the average value. That is, the variation of the thickness of the steel cord can be expressed by a coefficient of variation that is a value obtained by measuring the thicknesses of the steel cord at a plurality of measurement points arranged along the longitudinal direction of the steel cord and by dividing the standard deviation of the thicknesses at the plurality of measurement points by the average value of the thicknesses at the plurality of measurement points. For example, the coefficient of the variation of the thickness is preferably less than or equal to 0.05 and is more preferably less than or equal to 0.04.

The lower limit of the coefficient of the variation of the thickness is not particularly limited, but may be, for example, equal to or greater than 0.

In a case of a steel cord having a coefficient of the variation of the thickness less than or equal to 0.05, this means that the variation of the thickness of the steel cord can be specifically suppressed. Hence, in a case in which such a steel cord is used as a member of a tire to form a belt layer in accordance with the maximum value of the thickness of the steel cord, the belt layer can be made particularly thin and lightweight. As a result, it is also possible to particularly reduce the weight of the tire including the belt layer.

The coefficient of the variation of the thickness of the steel cord in the present embodiment can be measured and calculated, for example, by the following procedure.

First, with respect to a range of 5 cm or more and 25 cm or less along the longitudinal direction of the steel cord according to the present embodiment, the thickness is measured at 5 points or more and 15 points or less, and the average value and the standard deviation of the measured values are calculated. Then, the coefficient of variation can be calculated by dividing the standard deviation by the average value.

It should be noted that it is preferable that the measurement points are arranged to be equally spaced along the longitudinal direction of the steel cord.

For measuring the thickness of the steel cord, similarly to the slopes of the minor axes, measurement can be performed by embedding the steel cord in a transparent resin and cutting cross-sections in the longitudinal direction of the steel cord. Also, CT can be used to measure cross-sectional images perpendicular to the longitudinal direction of the steel cord at a plurality of locations to measure the thickness from the cross-sectional images.

It should be noted that, for the measurement, the direction of the minor axis direction of the ellipse, circumscribing the four element wires in one desired cross-section perpendicular to the longitudinal direction of the steel cord is first set as the thickness direction. Then, in other cross-sections perpendicular to the longitudinal direction of the steel cord, the thickness of the steel cord at each position can be measured by measuring the maximum length in the set thickness direction.

For the steel cord according to the present embodiment, in a plurality of cross-sections perpendicular to the longitudinal direction, in a case in which the ellipses circumscribing the four element wires are drawn, the average value of ratios of the minor axis lengths $L_{AS}$ to the major axis lengths $L_{AL}$ of the ellipses (see FIG. 2) is not particularly limited but can be set as desired. It should be noted that the major axis length $L_{AL}$ means the length of the major axis AL of the ellipse C, which is an elliptical circumscribing circle circumscribing the four element wires 11, and the minor axis length $L_{AS}$ means the length of the minor axis AS of the ellipse C. It should be noted that in the steel cord according to the present embodiment, the average value of the minor axis lengths/the major axis lengths ($L_{AS}/L_{AL}$), which are the ratios of the minor axis lengths to the major axis lengths in the ellipses, is preferably greater than or equal to 0.76 and less than or equal to 0.82 and is more preferably greater than or equal to 0.78 and less than or equal to 0.80.

This is because, in a plurality of cross-sections perpendicular to the longitudinal direction, in a case in which the ellipses circumscribing the four element wires are drawn, by making the average value of the minor axis lengths/the major axis lengths of the ellipses greater than or equal to 0.76, untwisting can be more reliably suppressed at the end portion or the like of the steel cord according to the present embodiment, for example.

Also, in a plurality of cross-sections perpendicular to the longitudinal direction, in a case in which the ellipses circumscribing the four element wires are drawn, by making the average value of the minor axis lengths/the major axis lengths of the ellipses less than or equal to 0.82, the thickness of the steel cord can be particularly suppressed, and the thickness of a belt layer using the steel cord can also be sufficiently suppressed. Therefore, the weight of a tire including the belt layer can be particularly reduced, which is preferable.

In a plurality of cross-sections perpendicular to the longitudinal direction, in a case in which the ellipses circumscribing the four element wires are drawn, the method of measuring and calculating the average value of the minor axis lengths/the major axis lengths, which are the ratios of the minor axis lengths $L_{AS}$ to the major axis lengths $L_{AL}$ of the ellipses, of the steel cord according to the present embodiment is not particularly limited.

For example, a steel cord is embedded in a transparent resin and the sample is cut at a plurality of desired positions in the longitudinal direction of the steel cord such that planes (cross-sections) perpendicular to the longitudinal direction of the steel cord are exposed. Subsequently, using a projector, by drawing the ellipses circumscribing the four element wires included in the respective cross-sections, and by measuring the lengths of the minor axes and the major axes, the minor axis lengths/the major axis lengths at the respective cross-sections can be calculated.

Also, for example, CT is used to measure cross-sectional images perpendicular to the longitudinal direction of the steel cord at a plurality of locations. Then, by drawing the ellipses circumscribing the four element wires included in the cross-sectional images and by measuring the lengths of the minor axes and the major axes, the minor axis lengths/the major axis lengths at the respective cross-sections can be calculated.

In measurement by either method, in a case of measuring the minor axis lengths/the major axis lengths in a plurality of cross-sections, with respect to a range of 5 cm or more and 25 cm or less along the longitudinal direction of the steel cord, it is preferable to draw the ellipses circumscribing the element wires in cross-sections at ten or more measurement points and to measure and calculate the minor axis lengths/the major axis lengths of the ellipses, for example.

It should be noted that the upper limit of the measurement points is not particularly limited, but, for example, is preferably less than or equal to 250 points from the viewpoint of productivity. Also, it is preferable that the measurement points are arranged to be equally spaced along the longitudinal direction of the steel cord.

Then, the average value of the minor axis lengths/the major axis lengths of the ellipses in the respective cross-sections can be calculated.

According to the steel cord of the present embodiment described above, by using it as a member of a tire, it is possible to form the tire that is excellent in lightness in weight and durability.

[Manufacturing Method of Steel Cord]

Although a method of manufacturing a steel cord according to the present embodiment is not particularly limited, a method of manufacturing a steel cord according to the present embodiment can include, for example, the following steps:

a twisting step of twisting four element wires; and
a flattening step of pressing the steel cord obtained through the twisting step along the thickness direction to be flattened.

Because the twisting step can be carried out by twisting together element wires with a twisting machine according to a usual method, a specific description thereof will not be given here. It should be noted that at least one of the four element wires supplied to the twisting step is preferably a wavy element wire.

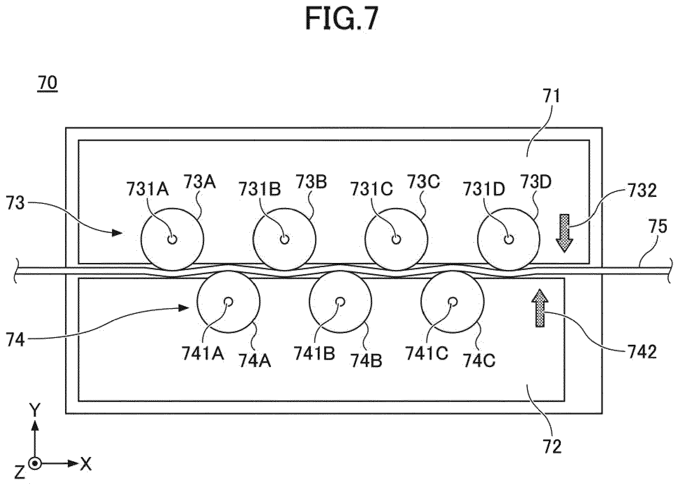

In the flattening step, for example, a flattening device 70 illustrated in FIG. 7 can be used to press the steel cord along its thickness direction to be flattened.

The flattening device 70 can include a base 71 and a first flattening roller part 73 provided on the base 71. The first flattening roller part 73 may be constituted by a single roller, but, as illustrated in FIG. 7, may include a plurality of first flattening rollers 73A to 73D. It should be noted that in a case in which a plurality of first flattening rollers are arranged, the number of rollers is not particularly limited. Rotation axes 731A to 731D of the first flattening rollers 73A to 73D included in the first flattening roller part 73 extend perpendicularly to the base 71, that is, in the Z-axis direction illustrated in the drawing.

Also, the flattening device 70 can include a base 72 and a second flattening roller part 74 provided on the base 72. The second flattening roller part 74 may be constituted by a single roller, but, as illustrated in FIG. 7, may include a plurality of second flattening rollers 74A to 74C. It should be noted that in a case in which a plurality of second flattening rollers are arranged, the number of rollers is not particularly limited. Rotation axes 741A to 741C of the plurality of second flattening rollers 74A to 74C included in the second flattening roller part 74 can be configured to extend perpendicularly to the base 72, that is, in the Z-axis direction illustrated in the drawing.

Then, between the first flattening roller part 73 and the second flattening roller part 74, a steel cord 75, which is made by twisting together four element wires prepared in the twisting step, is supplied, for example, along the X-axis direction in the drawing. By pressing the supplied steel cord 75 along the Y-axis direction illustrated in the drawing by the first flattening roller part 73 and the second flattening roller part 74, flattening can be performed. Specifically, the first flattening roller part 73 can press the steel cord 75 along a block arrow 732 and the second flattening roller part 74 can press the steel cord 75 along a block arrow 742 such that steel cord 75 can be pressed.

According to consideration by the inventors of the present invention, because a steel cord is obtained by helically twisting a plurality of element wires along the longitudinal direction, when being pressed along the thickness direction, the steel cord is easily rotated along its circumferential direction with the central axis as the axis of rotation. It should be noted that the central axis here means an axis that passes through the center of a plane perpendicular to the longitudinal direction of the steel cord before being flattened and is parallel to the longitudinal direction.

In a manufacturing method of the conventional flattened steel cord which in no way took account for such a rotation of the steel cord, the steel cord would be greatly rotated along the circumferential direction with the central axis as the axis of rotation at the time of performing the flattening process. Therefore, as described above, the slopes of the minor axes of the ellipses, circumscribing the element wires in cross-sections perpendicular to the longitudinal direction vary greatly depending on the positions in the longitudinal direction.

Therefore, in manufacturing the steel cord according to the present embodiment, in the flattening step, at the time of flattening the steel cord by the flattening device, it is preferable to suppress the degree by which the steel cord rotates about the central axis as the axis of rotation. The rotation of the steel cord around the central axis in the flattening step is preferably within ±30 degrees from the median value, is more preferably within ±20 degrees from the median value, and is further more preferably within ±15 degrees from the median value.

The method of suppressing such rotation is not particularly limited and can be selected at as desired.

For example, on the surfaces of the first flattening roller part 73 and the second flattening roller part 74 of the flattening device 70 to be in contact with the steel cord 75, grooves corresponding to the external shape of the steel cord 75 can be formed so that the steel cord 75 is configured to not rotate. For example, by forming grooves having different shapes on the surface of the first flattening roller part 73 to be in contact with the steel cord 75 and on the surface of the second flattening roller part 74 to be in contact with the steel cord 75, the rotation of the steel cord can be particularly suppressed.

<Tire>

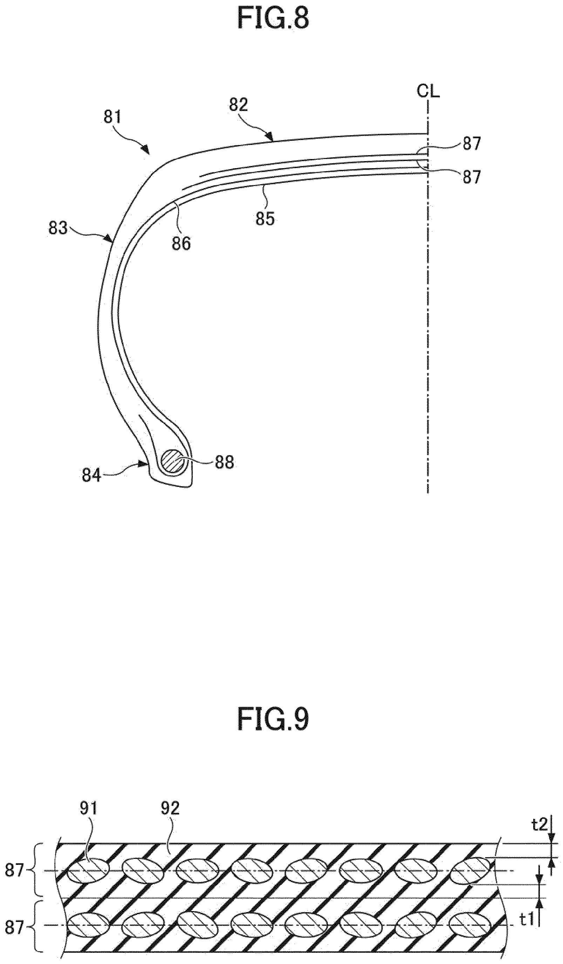

Next, a tire according to the present embodiment will be described with reference to FIG. 8 and FIG. 9.

A tire according to the present embodiment can include steel cords as described above.

FIG. 8 illustrates a cross-sectional view taken along a plane perpendicular to a circumferential direction of a tire 81 according to the present embodiment. In FIG. 8, a left side portion of the CL (centerline) is only illustrated. However, on a right side of the CL as well, a similar structure is continuously included, where the CL is an axis of symmetry.

As illustrated in FIG. 8, the tire 81 includes a tread portion 82, a sidewall portion 83, and a bead portion 84.

The tread portion 82 is a portion that contacts a road surface. The bead portion 84 is provided toward the inside of the tire 81 with respect to the tread portion 82. The bead portion 84 is a portion that contacts a rim of a vehicle wheel. The sidewall portion 83 connects the tread portion 82 and the bead portion 84. When the tread portion 82 is impacted through a road surface, the sidewall portion 83 is elastically deformed to absorb the impact.

The tire 81 includes an inner liner 85; a carcass 86; belt layers 87; and a bead wire 88.

The inner liner 85 is formed of rubber, and seals a gap between the tire 81 and the wheel.

The carcass 86 forms a backbone of the tire 81. The carcass 86 is formed of an organic fiber, such as polyester, nylon, or rayon; and rubber.

The bead wire 88 is provided in the bead portion 84. The bead wire 88 receives a tensile force acting on the carcass.

The belt layers 87 tighten the carcass 86 to increase rigidity of the tread 82. In the example illustrated in FIG. 8, the tire 81 includes the two belt layers 87.

FIG. 9 is a diagram schematically illustrating the two belt layers 87. FIG. 9 is a cross-sectional view of the belt layers 87 in the longitudinal direction, e.g., in a plane perpendicular to the circumferential direction of the tire 81.

As illustrated in FIG. 9, the two belt layers 87 are superimposed in a radial direction of the tire 81. Each belt layer 87 includes a plurality of steel cords 91 and rubber 92. The plurality of steel cords 91 are arranged in parallel in a row. As the steel cords 91, steel cords as described can be used.

It should be noted that the steel cords as described above have a flattened shape in a cross-section perpendicular to the longitudinal direction and it is preferable that the thickness direction of the steel cords is arranged to match the thickness direction of the belt layers. The thickness direction of the steel cords can be, for example, a minor axis direction when an ellipse circumscribing four element wires is drawn in one cross-section perpendicular to the longitudinal direction of the steel cords.

The rubber 92 also covers the steel cords 91, and the outer periphery of each steel cord 91 is fully surrounded by the rubber 92. The steel cords 91 are embedded in the rubber 92.

Steel cords as described above have a flattened shape in a cross-section perpendicular to the longitudinal direction, and the variation in the thickness and the maximum thickness are suppressed. Therefore, even when a first rubber thickness t1, which is the thickness of the rubber 92 arranged on the lower portions of the steel cords 91 in the belt layer 87, and a second rubber thickness t2, which is the thickness of the rubber 92 arranged on the upper portions of the steel cords 91, are thinned, it is possible to suppress exposure of the steel cords 91. Therefore, it is possible to reduce the entire thickness of the belt layers 87.

Thus, according to the tire of the present embodiment, the entire thickness of the belt layers 87 including the steel cords 91 described above can be suppressed, and the belt layers 87 can be reduced in weight. Therefore, the tire of the present embodiment including the belt layers can also be reduced in weight.

Also, as described above, in the steel cords described above, the degree of rubber penetration into the steel cords is high at the time of forming the tire using the steel cords. Thus, the area of the element wires included in the steel cords in contact with rubber is increased, and the adhesion between the element wires and the rubber is increased. Then, in a case in which a tire is mounted and used on a car or the like, moisture may penetrate the rubber and enter the tire. In the tire according to the present embodiment, as described above, because the area of the element wires contacting with rubber is high, it is possible to reduce contacting and reacting of element wires surfaces with moisture. Therefore, it is possible to maintain a high adhesion between the rubber and the element wires inside the tire, and it is possible to make the tire that is excellent in durability.

For the steel cord contained in the tire of the present embodiment, the degree of rubber penetration is preferably high, for example, is preferably greater than or equal to 70%, and is more preferably greater than or equal to 80%. It should be noted that because the degree of rubber penetration is preferably higher, the upper limit value is not particularly limited and can be, for example, less than or equal to 100%. A method of evaluating the degree of rubber penetration will be described later below with Experimental Examples.

In a case in which the degree of rubber penetration of the steel cord contained in the tire according to the present embodiment is greater than or equal to 70%, it is preferable because the rubber penetrates sufficiently into the inside of the steel cord and the durability of the tire is particularly increased.

The degree of rubber penetration of the steel cord contained in the tire according to the present embodiment can be selected depending on the number of wavy element wires, the bending height h, or the like.

According to the tire of the present embodiment described above, the tire can be excellent in lightness in weight and durability. Also, because of excellence in lightness in weight, it is possible to suppress rolling resistance that is a force generated when the tire is pressed against a drum to rotate. It is also possible to increase cornering power, which indicates a slope of increase of a cornering force with respect to a lateral slip angle of the tire. That is, the operation stability of a car on which the tire is mounted can be increased.

Although the embodiment has been described in detail above, it is not limited to a specific embodiment. Various modifications and changes can be made within a scope set forth in the claims.

Examples

Specific Examples will be explained below. However, the present invention is not limited to these Examples.

(Evaluation Method)

First, a method of evaluating steel cords that were prepared in Experimental Examples below will be described.

(1) Evaluation of Steel Cord

(1-1) Coefficient of Variation of Thickness

For the steel cord prepared for each Experimental Example, the thickness of the steel cord was measured at five points in the longitudinal direction, and its average value was defined as the thickness of the steel cord.

Specifically, first, for a range of 15 cm along the longitudinal direction of the steel cord prepared for each Experimental Example, the thickness was measured at five measurement points arranged equally spaced along the longitudinal direction.

For measuring the thickness, using a CT (model: inspeXio SMX-225CT manufactured by Shimadzu Corporation), cross-sectional images were taken at the above measurement points. Then, the minor axis direction of the ellipse that is circumscribing the four element wires in one selected cross-section is set as the thickness direction. Subsequently, the maximum length of the steel cord in the set thickness direction at each cross-section was measured. Thereby, the thickness of the steel cord in each cross-section was measured.

The thickness at five measurement points was then used to calculate the coefficient of variation of the thickness. The coefficient of variation is a value obtained by dividing the standard deviation calculated using the measured values of thickness at the five measurement points by the average value.

(1-2) Maximum Variation Range from Median Value of Slopes of Minor Axes and Average Value of Minor Axis Lengths/Major Axis Lengths of Ellipses Circumscribing Four Element Wires in Plurality of Cross-Sections Perpendicular to Longitudinal Direction

First, for the steel cord prepared for each Experimental Example, CT was used to measure the cross-sectional shapes in cross-sections perpendicular to the longitudinal direction. Specifically, over a range of 110 mm along the longitudinal direction of the steel cord, cross-sectional images were taken at measurement points each 0.5 mm spaced apart.

Then, for the obtained respective cross-sections, the ellipses circumscribing the four element wires were drawn, and the slopes of the minor axes of the ellipses were calculated. Then, the maximum variation range from the median value of the slopes of the minor axes was calculated.

Also, when calculating the maximum variation range from the median value of the slopes of the minor axes, cross-sectional images measured by using the CT were used to calculate the minor axis lengths/the major axis lengths of the ellipses circumscribing the four element wires in the respective cross-sections. Specifically, the minor axis lengths and the major axis lengths of the ellipses, circumscribing the four element wires, drawn in the respective cross-sectional images measured by using the CT were calculated, and the minor axis lengths/the major axis lengths were calculated. Then, the average value of the minor axis lengths/the major axis lengths calculated for the respective cross-sectional images was calculated.

(2) Evaluation of Tire

(2-1) Degree of Rubber Penetration

The steel cord was extracted from the tire prepared for each Experimental Example using a cutter knife.

Then, for each extracted steel cord, a single wavy element wire was removed. Within an observation length of 100 mm along the center line in the width direction of an area exposed removing the single wave element, the percentage of the length of the portion covered with rubber was calculated as the degree of rubber penetration. It should be noted that for Experiment Example 17, the degree of rubber penetration was evaluated similarly with the exception of removing a single element wire that was selected as desired.

The higher the value of the degree of rubber penetration, the better the rubber permeability.

(2-2) Rolling Resistance

For the tire prepared for each Experimental Example, the rolling resistance was measured under the following measurement conditions using a rolling resistance tester in accordance with the ISO 28580 standard.

Used Rim: 5.5 J
Internal pressure: 525 kPa
Load: 15.74 kN
Speed: 80 km/h

Then, with the rolling resistance of the tire according to Experiment Example 14 as 100, the rolling resistance of each of the tires prepared for the other Experimental Examples was indicated by the index. The smaller the index, the better the rolling resistance.

(2-3) Durability of Tire

The tire prepared for each Experimental Example was incorporated into a normal rim (size: 5.5 J), the tire was filled with air and the internal pressure was set to be 525 kPa. The tire was attached to a drum-type running tester and a total load of 15.74 kN was applied to the tire. The tire was caused to run on a drum with a radius of 1.7 m at a speed of 80 km/h. The distance traveled until damage was found on the tire was measured. It should be noted that the test was terminated if there was no damage at the time of 30,000 km travel. The results of the above test are indicated with 100 as an index for 30,000 km travel. The larger the index, the better the durability of the tire.

(2-4) Cornering Power

To a belt surface of a flat belt machine to which sandpaper was attached as a road surface, each pneumatic tire was pressed at a speed of 60 km/h, at a camber angle of 0 degrees, and at a load of 5 kN, and the slope when a slip angle was changed from 0 degrees to 1 degree was measured as the cornering power. It should be noted that a camber angle means am angle that is formed between a vertical plane to the belt surface of the flat belt machine and the radial direction of the tire, and may be referred to as a CA (Camber Angle). Also, a slip angle means an angle that is formed between a traveling direction and a direction in which the tire is directed, and may be referred to as SA (Slip Angle).

With the cornering power property of the tire according to Experimental Example 14 as 100, the cornering power properties of the tires prepared in the other Experimental Examples are indicated by indexes. It should be noted that the larger the index, the better the cornering power property.

(2-5) Belt Layer Mass

The mass of a single belt layer prepared when manufacturing the tire for each Experimental Example was measured. With the mass of the belt layer prepared when manufacturing the tire in Experiment Example 14 as 100, the masses of the belt layers prepared when manufacturing the tires in the other Experimental Examples are indicated by indexes. Thus, as the index decreases, the weight of the belt layer decreases. It should be noted that it has been confirmed that the tires in the respective Experimental Examples including the belt layers evaluated for the respective Experimental Examples also indicate a similar tendency.

The manufacturing conditions of the steel cords and the tires for the respective Experimental Examples will be described below. Experimental Examples 1 to 13 are Examples and Experimental Examples 14-17 are Comparative Examples.

[Experiment Example 1]

First, the steel cord was manufactured by the following procedure.

Four steel element wires having element wire diameters of 0.415 mm were twisted together to form a steel cord having a 1 × 4 structure as a twisted configuration (twisting step). It should be noted that as one of the four element wires, a wavy element wire, on which bent portions and non-bent portions were formed such that the ratio of the bending height h to the element diameter was 260% and the pitch P of repeating the bent portions and the non-bent portions was 12 mm, was used.

Because the 1 × 4 structure has already been described with reference to FIG. 1 and FIG. 2 and the bending height h and the pitch P of repeating have already been described with reference to FIG. 3, their descriptions are omitted here.

The steel cord obtained by twisting together the four element wires was supplied to the flattening device 70 illustrated in FIG. 7, and a flattening process was performed so as to make a cross-section perpendicular to the longitudinal direction of the steel cord a flattened shape (the flattening step). At the time of performing the flattening process, on the surfaces of the first flattening roller part 73 and the second flattening roller part 74 of the flattening device 70 to be in contact with the steel cord, grooves corresponding to the external shape of the steel cord were formed so that the steel cord was configured to not rotate. Specifically, grooves having different shapes were formed on the surface of the first flattening roller part 73 to be in contact with the steel cord and on the surface of the second flattening roller part 74 to be in contact with the steel cord. Then, the flattening process was performed while checking the position of the steel cord so that the rotation angle of the steel cord was within ±20 degrees.

As described above, the steel cord of this Experimental Example was prepared, and the above described evaluation was performed on the steel cord.

Next, a tire was prepared by using the prepared steel cord.

First, a rubber composition containing a rubber component and an additive was prepared. The rubber composition contained 100 parts by mass of natural rubber as the rubber component. The rubber composition contained, as the additive with respect to 100 parts of the rubber component, 60 parts by mass of carbon black, 6 parts by mass of sulfur, 1 part by mass of zinc oxide as a vulcanization accelerator, 10 parts by mass of zinc oxide, and 1 part by mass of cobalt stearate as an organic acid cobalt.

The steel cord and the rubber composition described above were used to make a pneumatic tire having the structure illustrated in FIG. 8 and FIG. 9 and having a size of 225/40R18.

It should be noted that at the time of preparing the tire, vulcanization was performed at a temperature of 160°C, a pressure of 25 kgf/cm$^2$, and an ECU x time of 58.

The above ECU (Equivalent Cure Unit) can be calculated by the following formula (1).

$$\mathrm{ECU} = \exp((-E/R) \times (1/T-1/T0)) \ldots (1)$$

Here, in the formula (1), E is the activation energy, R is the general gas constant, T0 is the reference temperature, and T is the vulcanization temperature, respectively, E = 20 kcal/mol, R = 1.987 × 0.001 kcal/mol-deg, and T0 = 141.7°C.

Also, the time in ECU x time means the vulcanization time in minutes.

The obtained tire was evaluated as described above. The evaluation results of the steel cord and the tire are indicated in Table 1.

[Experimental Example 2 and Experimental Example 3]

Steel cords were prepared and evaluated similarly to Experimental Example 1 with the exception that, when performing the flattening process of the steel cords, it was carried out such that the rotation angle of the steel cord was within ±15 degrees from the median value in Experimental Example 2 and within ±30 degrees from the median value in Experimental Example 2.

Also, using the obtained steel cords, tires were prepared and evaluated similarly to Experimental Example 1.

The evaluation results of the steel cords and the tires are indicated in Table 1.

[Experimental Example 4 and Experimental Example 5]

When manufacturing steel cords, among the four element wires, two element wires were made as wavy element wires in Experiment Example 4 and three element wires were made as wavy element wires in Experiment Example 5. Other than the above, steel cords were prepared and evaluated similarly to Experimental Example 1.

It should be noted that in each of the steel cords prepared for Experimental Example 4 and Experimental Example 5, it was confirmed that untwisting at the end portion was not identified and the external shape of the steel cord could be maintained.

Also, using the obtained steel cords, tires were prepared and evaluated similarly to Experimental Example 1.

The evaluation results of the steel cords and the tires are indicated in Table 1.

[Experimental Example 6 to Experimental Example 8]

When manufacturing steel cords, the wavy element wires were made such that the ratio of the bending height h to the element wire diameter was 230% in Experimental Example 6, was 240% in Experimental Example 7, and was 280% in Experimental Example 8. Other than the above, steel cords were prepared and evaluated similarly to Experimental Example 1.
Also, using the obtained steel cords, tires were prepared and evaluated similarly to Experimental Example 1.
The evaluation results of the steel cords and the tires are indicated in Table 1.

[Experimental Example 9 to Experimental Example 11]

When performing the flattening process of the steel cords, the degree of pressure by the first flattening roller part 73 and the second flattening roller part 74 was changed such that the average value of the minor axis lengths/the major axis lengths of the ellipses circumscribing the four element wires in cross-sections perpendicular to the longitudinal direction was 0.77 in Experimental Example 9, was 0.81 in Experimental Example 10, and was 0.85 in Experimental Example 11. Other than the above, steel cords were prepared and evaluated similarly to Experimental Example 1.
Also, using the obtained steel cords, tires were prepared and evaluated similarly to Experimental Example 1.
The evaluation results of the steel cords and the tires are indicated in Table 1.

[Experimental Example 12 and Experimental Example 13]

When preparing steel cords, element wires having wire diameters of 0.27 mm were used for Experimental Example 12, and element wires having wire diameters of 0.45 mm were used for Experimental Example 13. Other than the above, steel cords were prepared and evaluated similarly to Experimental Example 1.
Also, using the obtained steel cords, tires were prepared and evaluated similarly to Experimental Example 1.
The evaluation results of the steel cords and the tires are indicated in Table 1.

[Experimental Example 14]

A steel cord was prepared and evaluated similarly to Experimental Example 1 with the exception that, when performing the flattening process of the steel cord, the rotational angle of the steel cord was made within $\pm 40$ degrees.
Also, using the obtained steel cord, a tire was prepared and evaluated similarly to Experimental Example 1.
The evaluation results of the steel cord and the tire are indicated in Table 1.

[Experimental Example 15]

When performing the flattening process of the steel cord, without adjusting the degree of rotation of the steel cord, on the surface of the first flattening roller part 73 of the flattening device 70 to be in contact with the steel cord and on the surface of the second flattening roller part 74 to be in contact with the steel cord, grooves having the same shape were formed. Other than the above, a steel cord was prepared and evaluated similarly to Experimental Example 1.
Also, using the obtained steel cord, a tire was prepared and evaluated similarly to Experimental Example 1.
The evaluation results of the steel cord and the tire are indicated in Table 1.

[Experimental Example 16]

A steel cord was prepared and evaluated similarly to Experimental Example 1 with the exception of not performing the flattening process for the steel cord.
It should be noted that when the cross-sectional shape of the obtained steel cord perpendicular to the longitudinal direction was checked, the circumscribing circle circumscribing the four element wires was a true circle and was not flattened.
Also, using the obtained steel cord, a tire was prepared and evaluated similarly to Experimental Example 1.
The evaluation results of the steel cord and the tire are indicated in Table 1.

[Experimental Example 17]

A steel cord was prepared and evaluated similarly to Experimental Example 1 with the exception of using, for all the four element wires, straight element wires having no bent portions to prepare the steel cord without using a wavy element wire.

Also, using the obtained steel cord, a tire was prepared and evaluated similarly to Experimental Example 1.

The evaluation results of the steel cord and the tire are indicated in Table 1.

Table 1

| | EXPERIMENTAL EXAMPLE 1 | EXPERIMENTAL EXAMPLE 2 | EXPERIMENTAL EXAMPLE 3 | EXPERIMENTAL EXAMPLE 4 | EXPERIMENTAL EXAMPLE 5 | EXPERIMENTAL EXAMPLE 6 | EXPERIMENTAL EXAMPLE 7 | EXPERIMENTAL EXAMPLE 8 | EXPERIMENTAL EXAMPLE 9 | EXPERIMENTAL EXAMPLE 10 | EXPERIMENTAL EXAMPLE 11 | EXPERIMENTAL EXAMPLE 12 | EXPERIMENTAL EXAMPLE 13 | EXPERIMENTAL EXAMPLE 14 | EXPERIMENTAL EXAMPLE 15 | EXPERIMENTAL EXAMPLE 16 | EXPERIMENTAL EXAMPLE 17 |
|---|---|---|---|---|---|---|---|---|---|---|---|---|---|---|---|---|---|
| NUMBER OF WAVY ELEMENT WIRES | 1 | 1 | 1 | 2 | 3 | 1 | 1 | 1 | 1 | 1 | 1 | 1 | 1 | 1 | 1 | 1 | 0 |
| RATIO OF BENDING HEIGHT TO ELEMENT WIRE DIAMETER OF WAVY ELEMENT WIRE (%) | 260 | 260 | 260 | 260 | 260 | 230 | 240 | 280 | 260 | 260 | 260 | 260 | 260 | 260 | 260 | 260 | - |
| ELEMENT WIRE DIAMETER (mm) | 0.415 | 0.415 | 0.415 | 0.415 | 0.415 | 0.415 | 0.415 | 0.415 | 0.415 | 0.415 | 0.415 | 0.27 | 0.45 | 0.415 | 0.415 | 0.415 | 0.415 |

| STEEL CORD | | EXPERIMENTAL EXAMPLE 1 | EXPERIMENTAL EXAMPLE 2 | EXPERIMENTAL EXAMPLE 3 | EXPERIMENTAL EXAMPLE 4 | EXPERIMENTAL EXAMPLE 5 | EXPERIMENTAL EXAMPLE 6 | EXPERIMENTAL EXAMPLE 7 | EXPERIMENTAL EXAMPLE 8 | EXPERIMENTAL EXAMPLE 9 | EXPERIMENTAL EXAMPLE 10 | EXPERIMENTAL EXAMPLE 11 | EXPERIMENTAL EXAMPLE 12 | EXPERIMENTAL EXAMPLE 13 | EXPERIMENTAL EXAMPLE 14 | EXPERIMENTAL EXAMPLE 15 | EXPERIMENTAL EXAMPLE 16 | EXPERIMENTAL EXAMPLE 17 |
|---|---|---|---|---|---|---|---|---|---|---|---|---|---|---|---|---|---|---|
| | SHAPE OF CROSS SECTION PERPENDICULAR TO LONGITUDINAL DIRECTION | FLATTENED | FLATTENED | FLATTENED | FLATTENED | FLATTENED | FLATTENED | FLATTENED | FLATTENED | FLATTENED | FLATTENED | FLATTENED | FLATTENED | FLATTENED | FLATTENED | FLATTENED | TRUE CIRCLE | FLATTENED |
| | COEFFICIENT OF VARIATION OF THICKNESS | 0.021 | 0.025 | 0.035 | 0.025 | 0.025 | 0.021 | 0.024 | 0.03 | 0.027 | 0.023 | 0.023 | 0.025 | 0.025 | 0.052 | 0.052 | 0.01 | 0.025 |

| | | EXPER-IMEN-TAL EX-AMPLE 1 | EXPER-IMEN-TAL EX-AMPLE 2 | EXPER-IMEN-TAL EX-AMPLE 3 | EXPER-IMEN-TAL EX-AMPLE 4 | EXPER-IMEN-TAL EX-AMPLE 5 | EXPER-IMEN-TAL EX-AMPLE 6 | EXPER-IMEN-TAL EX-AMPLE 7 | EXPER-IMEN-TAL EX-AMPLE 8 | EXPER-IMEN-TAL EX-AMPLE 9 | EXPER-IMEN-TAL EX-AMPLE 10 | EXPER-IMEN-TAL EX-AMPLE 11 | EXPER-IMEN-TAL EX-AMPLE 12 | EXPER-IMEN-TAL EX-AMPLE 13 | EXPER-IMEN-TAL EX-AMPLE 14 | EXPER-IMEN-TAL EX-AMPLE 15 | EXPER-IMEN-TAL EX-AMPLE 16 | EXPER-IMEN-TAL EX-AMPLE 17 |
|---|---|---|---|---|---|---|---|---|---|---|---|---|---|---|---|---|---|---|
| | MAXIMUM VARIATION RANGE FROM MEDIAN OF SLOPES OF MINOR AXES (DEGREE) | 20 | 15 | 30 | 20 | 20 | 20 | 20 | 20 | 20 | 20 | 20 | 20 | 20 | 40 | 90 | 0 | 20 |
| | AVERAGE VALUE OF MINOR AXIS LENGTHS/MAJOR AXIS LENGTHS | 0.79 | 0.79 | 0.79 | 0.79 | 0.79 | 0.79 | 0.79 | 0.79 | 0.77 | 0.81 | 0.85 | 0.79 | 0.79 | 0.79 | 0.79 | 1 | 0.79 |

EP 3 770 319 B1

| | | EXPER-IMEN-TAL EX-AMPLE 1 | EXPER-IMEN-TAL EX-AMPLE 2 | EXPER-IMEN-TAL EX-AMPLE 3 | EXPER-IMEN-TAL EX-AMPLE 4 | EXPER-IMEN-TAL EX-AMPLE 5 | EXPER-IMEN-TAL EX-AMPLE 6 | EXPER-IMEN-TAL EX-AMPLE 7 | EXPER-IMEN-TAL EX-AMPLE 8 | EXPER-IMEN-TAL EX-AMPLE 9 | EXPER-IMEN-TAL EX-AMPLE 10 | EXPER-IMEN-TAL EX-AMPLE 11 | EXPER-IMEN-TAL EX-AMPLE 12 | EXPER-IMEN-TAL EX-AMPLE 13 | EXPER-IMEN-TAL EX-AMPLE 14 | EXPER-IMEN-TAL EX-AMPLE 15 | EXPER-IMEN-TAL EX-AMPLE 16 | EXPER-IMEN-TAL EX-AMPLE 17 |
|---|---|---|---|---|---|---|---|---|---|---|---|---|---|---|---|---|---|---|
| | DE-GREE OF RUB-BER PENE-TRA-TION (%) | 80 | 80 | 80 | 90 | 95 | 70 | 75 | 85 | 80 | 80 | 80 | 82 | 78 | 80 | 80 | 80 | 60 |
| | ROLL-ING RE-SIST-ANCE | 85 | 90 | 96 | 90 | 90 | 90 | 90 | 90 | 86 | 94 | 99 | 87 | 92 | 100 | 125 | 110 | 90 |
| TIR E | DURA-BILITY OF TIRE | 100 | 100 | 100 | 100 | 100 | 100 | 100 | 100 | 100 | 100 | 100 | 100 | 100 | 100 | 100 | 100 | 90 |
| | CORNERING POWER | 115 | 110 | 105 | 110 | 110 | 110 | 110 | 110 | 114 | 107 | 101 | 113 | 109 | 100 | 75 | 90 | 110 |
| | BELT LAYER MASS | 70 | 80 | 90 | 80 | 80 | 80 | 80 | 80 | 75 | 85 | 95 | 78 | 82 | 100 | 150 | 120 | 80 |

According to the results indicated in Table 1, it could be confirmed that the index for the belt layer mass was less than 100 for each of Experimental Example 1 to Experimental Example 13. The steel cord for each of these Experimental Examples has a flattened shape in a cross-section perpendicular to the longitudinal direction, and in a plurality of cross-sections perpendicular to the longitudinal direction, in a case in which the ellipses circumscribing the four element wires are drawn, the slopes of the minor axes of the ellipses are within ±30 degrees from the median value. It is considered that this is because the variation in the thickness and the maximum thickness of the steel cord could be suppressed.

Also, for each of Experiment 1 to Experiment 13, it could be confirmed that the index for the rolling resistance was small and less than 100, and the index for the cornering power was large and more than 100. This is considered to be a property obtained by reducing the weight of the tire.

Also, it could be confirmed that the index for the durability of the tire was 100 for each of Experimental Example 1 to Experimental Example 13. It is considered that this is because the degree of rubber penetration when manufacturing the tire is increased by using one or more wavy wires in the four element wires.

Description of Reference Numerals

    10, 50, 60, 75, 91 steel cord
    11, 42 element wire
    30 wavy element wire
    31, 31A, 31B, 31C bent portion
    32 non-bent portion
    41 preformer
    70 flattening device
    71, 72 base
    73 first flattening roller part
    73A, 73B, 73C, 73D first flattening roller
    74 second flattening roller part
    74A, 74B, 74C second flattening roller
    731A to 731D and 741A to741C rotation axis
    732, 742 block arrow
    81 tire
    82 tread section
    83 sidewall portion
    84 bead section
    85 inner liner
    86 carcass
    87 belt layer
    92 rubber
    AS, AS51, AS52, AS61, AS62 minor axis
    AL major axis
    C, C51, C52, C61, C62 ellipse
    d5, d6 angle
    $L_{AL}$ major axis length
    $L_{AS}$ minor axis length
    P pitch of repeating
    S plane
    T51, T52, T61, T62 thickness
    t1 first rubber thickness
    t2 second rubber thickness

**Claims**

1. A steel cord (10) having a 1 × 4 structure in which four element wires (11) are twisted together,

    wherein at least one of the four element wires (11) is a wavy element wire (30) repeatedly having bent portions (31) and non-bent portions (32) along a longitudinal direction,
wherein the steel cord (10) in a cross-section perpendicular to the longitudinal direction has a flattened shape, and **characterised in that** any ellipses (C) drawn circumscribing the four element wires (11) in a cross-section perpendicular to the longitudinal direction have slopes of minor axes of the ellipses (C) within $\pm 30$ degrees from a median value.

2. The steel cord (10) according to claim 1,

wherein when the wavy element wire (30) is placed on a plane, a height from the plane to the bent portions (31) that are at a far side from the plane is defined as a bending height, and
wherein the bending height is greater than or equal to 240% and less than or equal to 280% of an element wire (11) diameter of the wavy element wire (30).

3. The steel cord (10) according to claim 1 or claim 2, wherein in a plurality of cross-sections perpendicular to the longitudinal direction, in a case in which ellipses (C) circumscribing the four element wires (11) are drawn, an average value of minor axis lengths/major axis lengths that are ratios of the minor axis lengths ($L_{AS}$) to the major axis lengths ($L_{AL}$) of the ellipses is greater than or equal to 0.76 and less than or equal to 0.82.

4. The steel cord (10) according to any one of claim 1 to claim 3, wherein element wire diameters of the element wires (11) are greater than or equal to 0.25 mm and less than or equal to 0.45 mm.

5. The steel cord (10) according to any one of claim 1 to claim 4,

wherein in a case in which an ellipse (C) circumscribing the four element wires (11) is drawn in one cross-section perpendicular to the longitudinal direction, a minor axis direction of the ellipse (C) is defined as a thickness direction,
wherein a maximum length in the thickness direction in cross-sections perpendicular to the longitudinal direction is defined as a thickness, and
wherein a coefficient of variation of the thickness is less than or equal to 0.05.

6. A tire (81) comprising the steel cord (10) according to any one of claim 1 to claim 5.

7. The tire (81) according to claim 6, wherein a degree of rubber penetration of the steel cord (10) is greater than or equal to 70%.

**Patentansprüche**

1. Stahlseil (10) mit einer 1 $\times$ 4 Struktur, bei welcher vier Elementdrähte (11) miteinander verdrillt sind,

wobei mindestens einer der vier Elementdrähte (11) ein gewellter Elementdraht (30) ist, der wiederholt gebogene Abschnitte (31) und nicht gebogene Abschnitte (32) entlang einer Längsrichtung aufweist,
wobei das Stahlseil (10) in einem Querschnitt senkrecht zur Längsrichtung eine abgeflachte Form aufweist, und **dadurch gekennzeichnet, dass** alle Ellipsen (C), welche die vier Elementdrähte (11) umschreibend gezeichnet sind, in einem Querschnitt senkrecht zur Längsrichtung Neigungen der kleinen Achsen der Ellipsen (C) innerhalb von $\pm 30$ Grad von einem Mittelwert aufweisen.

2. Stahlseil (10) nach Anspruch 1, wobei, wenn der gewellte Elementdraht (30) auf einer Ebene angeordnet ist, eine Höhe von der Ebene zu den gebogenen Abschnitten (31) die auf einer von der Ebene entfernten Seite sind, als eine Biegehöhe definiert ist, und
wobei die Biegehöhe größer als oder gleich 240% und kleiner als oder gleich 280% eines Durchmessers des Elementdrahtes (11) des gewellten Elementdrahtes (30) ist.

3. Stahlseil (10) nach Anspruch 1 oder Anspruch 2, wobei in einer Vielzahl Querschnitte senkrecht zur Längsrichtung, in einem Fall, in dem Ellipsen (C) die vier Elementdrähte (11) umschreibend gezeichnet sind, ein Durchschnittswert der Längen der kleinen Achsen/Längen der großen Achsen, die Verhältnisse der Längen der kleinen Achsen ($L_{AS}$) zu den Längen der großen Achsen ($L_{AL}$) der Ellipsen sind, größer als oder gleich 0,76 und kleiner als oder gleich 0,82 ist.

4. Stahlseil (10) nach einem der Ansprüche 1 bis 3, wobei die Elementdrahtdurchmesser der Elementdrähte (11) größer als oder gleich 0,25 mm und kleiner als oder gleich 0,45 mm sind.

5. Stahlseil (10) nach einem der Ansprüche 1 bis 4,

   wobei in einem Fall, in dem eine Ellipse (C), welche die vier Elementdrähte (11) umschreibt, in einem Querschnitt senkrecht zur Längsrichtung gezeichnet ist, eine Richtung einer kleinen Achse der Ellipse (C) als eine Dickenrichtung definiert ist,
   wobei eine maximale Länge in der Dickenrichtung in Querschnitten senkrecht zur Längsrichtung als eine Dicke definiert ist, und
   wobei ein Variationskoeffizient der Dicke kleiner als oder gleich 0,05 ist.

6. Reifen (81), aufweisend das Stahlseil (10) nach einem der Ansprüche 1 bis 5.

7. Reifen (81) nach Anspruch 6, wobei ein Grad der Gummidurchdringung des Stahlseils (10) größer als oder gleich 70 % ist.

**Revendications**

1. Câble en acier (10) ayant une structure 1 × 4 dans laquelle quatre fils élémentaires (11) sont torsadés ensemble,

   dans lequel au moins un des quatre fils élémentaires (11) est un fil élémentaire ondulé (30) présentant de manière répétée des portions courbées (31) et des portions non-courbées (32) le long d'une direction longitudinale,
   dans lequel le câble en acier (10) dans une section transversale perpendiculaire à la direction longitudinale présente une forme aplanie, et
   **caractérisé en ce que** les ellipses (C) tirées en circonscrivant les quatre fils élémentaires (11) dans une section transversale perpendiculaire à la direction longitudinale présentent des pentes d'axes mineurs des ellipses (C) dans les ± 30 degrés à partir d'une valeur médiane.

2. Câble en acier (10) selon la revendication 1,

   dans lequel lorsque le fil élémentaire ondulé (30) est placé sur un plan, une hauteur à partir du plan jusqu'aux portions courbées (31) qui se trouvent sur un côté éloigné du plan est définie comme une hauteur de courbure, et
   dans lequel la hauteur de courbure est supérieure ou égale à 240 % et inférieure ou égale à 280 % d'un diamètre de fil élémentaire (11) du fil élémentaire ondulé (30).

3. Câble en acier (10) selon la revendication 1 ou revendication 2, dans lequel dans une pluralité de sections transversales perpendiculaires à la direction longitudinale, dans un cas où des ellipses (C) circonscrivant les quatre fils élémentaires (11) sont tirées, une valeur moyenne des longueurs d'axe mineur/longueurs d'axe majeur qui sont des rapports des longueurs d'axe mineur ($L_{AS}$) aux longueurs d'axe majeur ($L_{AL}$) des ellipses est supérieure ou égale à 0,76 et inférieure ou égale à 0,82.

4. Câble en acier (10) selon l'une quelconque de la revendication 1 à revendication 3, dans lequel les diamètres de fil élémentaire des fils élémentaires (11) sont supérieur ou égaux à 0,25 mm et inférieurs ou égaux à 0,45 mm.

5. Câble en acier (10) selon l'une quelconque de la revendication 1 à revendication 4,

   dans lequel dans un cas dans lequel une ellipse (C) circonscrivant les quatre fils élémentaires (11) est tirée dans une section transversale perpendiculaire à la direction longitudinale, une direction d'axe mineur de l'ellipse (C) est définie comme une direction d'épaisseur,
   dans lequel une longueur maximum dans la direction d'épaisseur dans des sections transversales perpendiculaires à la direction longitudinale est définie comme une épaisseur, et
   dans lequel un coefficient de variation de l'épaisseur est inférieur ou égal à 0,05.

6. Pneu (81) comprenant le câble en acier (10) selon l'une quelconque de la revendication 1 à revendication 5.

7. Pneu (81) selon la revendication 6, dans lequel un degré de pénétration de caoutchouc du câble en acier (10) est supérieur ou égal à 70 %.

# FIG.1

# FIG.2

# FIG.3

# FIG.4

# FIG.5

# FIG.6

# FIG.7

# FIG.8

# FIG.9

**EP 3 770 319 B1**

**REFERENCES CITED IN THE DESCRIPTION**

**Patent documents cited in the description**

- JP 2017190032 A
- JP 2001055676 A
- JP H11350366 A
- JP 2016075003 A